# EUROPÄISCHE PATENTSCHRIFT

(11) **EP 3 311 440 B1**
(45) Veröffentlichungstag und Bekanntmachung des Hinweises auf die Patenterteilung: **07.08.2019**
(21) Anmeldenummer: 16729589.8
(22) Anmeldetag: 17.06.2016
(51) Int. Cl.: H01M 10/052, H01M 10/0563

(54) **NATRIUM-SCHWEFEL-BATTERIE, VERFAHREN ZU DEREN BETRIEB UND VERWENDUNG VON PHOSPHORPOLYSULFID ALS ELEKTROLYTZUSATZ IN NATRIUM-SCHWEFEL-BATTERIEN**
SODIUM-SULFUR BATTERY, METHOD FOR ITS OPERATION, AND USE OF PHOSPHORUS POLYSULFIDE AS ELECTROLYTE ADDITIVE IN SODIUM-SULFUR BATTERIES
BATTERIE DE SOUFRE DU SODIUM, MÉTHODE POUR SON OPÉRATION ET UTILISATION DE POLYSULFURE DE PHOSPHORE COMME L'ADDITIF D'ÉLECTROLYTE DANS LES BATTERIES DE SOUFRE DU SODIUM

(30) Priorität: 17.06.2015 DE 102015211154
(43) Veröffentlichungstag der Anmeldung: 25.04.2018
(73) Patentinhaber: Fraunhofer-Gesellschaft zur Förderung der angewandten Forschung e.V., 80686 München (DE)
(72) Erfinder: KOHL, Michael, OX4 2FW Oxford (GB); BORMANN, Fabian, 01277 Dresden (DE); ALTHUES, Holger, 01309 Dresden (DE); KASKEL, Stefan, 01159 Dresden (DE)
(74) Vertreter: Pfenning, Meinig & Partner mbB
(86) Internationale Anmeldenummer: PCT/EP2016/063988
(87) Internationale Veröffentlichungsnummer: WO 2016/202969

(56) Entgegenhaltungen:
- YU X ET AL: "Room-temperature sodium-sulfur batteries with liquid-phase sodium polysulfide catholytes and binder-free multiwall carbon nanotube fabric electrodes", 2014, JOURNAL OF PHYSICAL CHEMISTRY C 2014 AMERICAN CHEMICAL SOCIETY USA, VOL. 118, NR. 40, PAGE(S) 22952 - 22959, XP002760301, Zusammenfassung Seite 22953, linke Spalte, letzter Absatz - Seite 22954, linke Spalte, Absatz 2; Abbildung 1
- WENZEL SEBASTIAN ET AL: "Thermodynamics and cell chemistry of room temperature sodium/sulfur cells with liquid and liquid/solid electrolyte", JOURNAL OF POWER SOURCES, Bd. 243, 15. Juni 2013 (2013-06-15), Seiten 758-765, XP028693519, ISSN: 0378-7753, DOI: 10.1016/J.JPOWSOUR.2013.05.194
- YU XINGWEN ET AL: "Highly Reversible Room-Temperature Sulfur/Long-Chain Sodium Polysulfide Batteries.", 5. Juni 2014 (2014-06-05), THE JOURNAL OF PHYSICAL CHEMISTRY LETTERS 5 JUN 2014, VOL. 5, NR. 11, PAGE(S) 1943 - 1947, XP002760302, ISSN: 1948-7185 Zusammenfassung; Abbildung 1 Seite 1946, rechte Spalte Seite 1943, rechte Spalte, letzter Absatz - Seite 1944, rechte Spalte, Absatz 1

## Beschreibung

Erfindungsgemäß wird eine Natrium-Schwefel-Batterie bereitgestellt, die gegenüber bekannten Natrium-Schwefel-Batterien eine geringere Anfälligkeit gegenüber den negativen Auswirkungen des Polysulfidshuttle-Mechanismus aufweist. Durch die Zugabe eines Additivs zur Komplexierung von Natriumpolysulfid wurde erreicht, dass der üblicherweise auftretende Polysulfidshuttle-Mechanismus und die damit verbundene Selbstentladung der Batterie unterdrückt ist. Zudem zeigte sich während dem Zyklieren der Batterie eine niedrigere Ladespannung und eine höhere Entladespannung. Als Folge hiervon weist die erfindungsgemäße Natrium-Schwefel-Batterie eine deutlich verbesserte Energieeffizienz und Entladekapazität gegenüber bekannten Natrium-Schwefel-Batterien auf. Es wird zudem ein Verfahren zum Betrieb der Batterie vorgestellt und die Verwendung von Phosphorpolysulfid, optional in Kombination mit Natriumsulfid, als Elektrolytzusatz in Natrium-Schwefel-Batterien vorgeschlagen.

Im Stand der Technik wird in Natrium-Schwefel-Batterien im Allgemeinen elementares Natrium als Anode, Schwefel als Kathode und ein Separator aus Keramik eingesetzt. Damit die lonenleitfähigkeit ausreichend hoch ist muss dieser Batterietyp auf Temperaturen erhitzt werden, bei denen Natrium und Schwefel flüssig vorliegen d.h. auf ca. 300-350 °C. Flüssiges Natrium weist jedoch ein großes Sicherheitsrisiko auf. Zudem ist die Energieeffizienz aufgrund der für die Temperierung benötigten Heizung verringert. Die maximale Ausnutzung des Kathodenaktivmaterials Schwefel ist in diesem Hochtemperatur-Batterietyp auf 25 % der theoretischen Ausnutzung beschränkt, da nur Entladeprodukte, die eine höhere molare Masse als Natriummonosulfid₄ aufweisen (z.B. Natriumpolysulfid), einen Schmelzpunkt unterhalb 350 °C besitzen.

Erste bei Raumtemperatur betriebene Natrium-Schwefel Batterien sind bereits bekannt. Die bei Raumtemperatur betreibbare Natrium-Schwefel Batterie ermöglicht eine Erhöhung der erreichbaren Energiedichte für reversible, elektrochemische Energiespeicher von 250 Wh/kg der aktuellen Li-Ion Technologie auf über 300 Wh/kg für die Natrium-Schwefel-Batterie. Da bei der Herstellung von Natrium-Schwefel-Batterien kein Lithium und auch keine seltenen, auf Kobalt basierenden Stoffe benötigt werden, können diese Batterien wesentlich ökonomischer bereitgestellt werden. Diese Kosteneinsparung ist der Grund, warum die Hochtemperatur-Natrium-Schwefel Batterie schon seit über 30 Jahren eingesetzt wird, um in großem Maßstab Strom zu speichern.

Der große Kritikpunkt dieser bisherigen kommerziell eingesetzt Natrium-Schwefel Batterie ist ihre hohe Betriebstemperatur d.h. eine Temperatur von über 300 °C, die benötigt wird, um die Ausgangsprodukte Natrium und Schwefel, sowie auch ein Teil deren Entladeprodukte, in flüssiger Phase zu halten. Nur in flüssiger Phase haben diese Stoffe eine genügend hohe elektrische und ionische Leitfähigkeit für den Betrieb. Auch der bislang eingesetzte keramische Separator besitzt nur bei dieser Temperatur eine ausreichend hohe ionische Leitfähigkeit.

Ein weiteres Problem sind hohe Schmelztemperaturen der einzelnen Natriumpolysulfid-Entladeprodukte. Während bis zum Na₂S₄₊ₙ (n ≥ 0) noch eine Temperatur von ≤ 290 °C ausreicht, würde für Na₂S₂ bzw. Na₂S Temperaturen von ≥ 470 °C bzw. ≥ 1168 °C benötigt werden, um diese Stoffe flüssig zu halten. Dies limitiert die maximal erreichbare Entladekapazität auf 440 mAh/g Schwefel.

Um die Natrium-Schwefel Zelle bei Raumtemperatur betreiben zu können, wurden Kathoden entwickelt, die statt aus reinem Schwefel aus einem Kohlenstoff-Schwefel-Komposit bestehen, um Schwefel auch bei Raumtemperatur elektrisch zu kontaktieren. Ebenso wurde ein flüssiger Elektrolyt zusätzlich in die Zellen eingebracht, um die festen Elektroden miteinander ionisch zu kontaktieren.

Um eine schnelle Ladung und Entladung der Zelle zu ermöglichen werden flüssige, Ether-basierte Elektrolyte eingesetzt, da diese die Natrium-Schwefel Entladeprodukte, die Natriumpolysulfide, lösen können und damit aus dem gelösten Zustand heraus eine schnelle Kinetik der Entlade- und Ladereaktionen ermöglichen. Dieser flüssige Elektrolyt birgt jedoch ein großes Problem der Raumtemperatur-Natrium-Schwefel-Batterien, da ein im Elektrolyt gelöstes Polysulfid im Ruhezustand oder während des Betriebs der Batterie von der positiv geladenen Kathode zur negativ geladenen Anode wandern kann. Aufgrund eines dort stattfindenden Elektronentransfers wird das Polysulfid elektrisch bis hin zur voll sodiierten Spezies Natriumsulfid reduziert. Diese Reaktion ist als parasitäre Selbstentladereaktion anzusehen (bekannt als sog. "Polysulfidshuttle"), da sie während der eigentlichen Ladung oder Entladung, also der Oxidation bzw. Reduktion von Polysulfiden auf der Kathodenseite, zu einer Verringerung der Polysulfidkonzentration auf der Kathode führt. Aufgrund dieser Wanderung und elektrochemischen Reduktion der Polysulfide an der Anode wird die Entladekapazität wie auch die Ladeeffizienz einer Batterie deutlich verringert.

Bislang wurden im Stand der Technik keramische Separatoren (z.B. eine Na-β"-Al₂O₃ Membran) bei Natrium-Schwefel-Batterien eingesetzt, die bei Raumtemperatur betreibbar sind (Wenzel S. et al. (2013) J. Power Resources, Bd. 243, S. 758-765). Diese keramischen Separatoren besitzen bei Raumtemperatur eine Natrium-Ionen-Leitfähigkeit von etwa 2 mS/cm. Es konnte mit diesem keramischen Separator eine Erhöhung der Kapazitätsretention erzielt werden. Es konnte nachgewiesen werden, dass durch den keramischen Separator der Polysulfidshuttle unterbunden wird.

Darüberhinaus ist im Stand der Technik bekannt, dass mit einem Kohlenstoff, der rein-mikroporös ist und in dem Schwefel eingebracht wurde, eine Zelle ohne Polysulfidshuttle hergestellt werden kann (Xin S. et al. (2014) Adv. Mater., Bd. 26, S. 1261-1265). Es wird vermutet, dass der in den Mikroporen eingebrachte Schwefel bzw. dessen Polysulfide Reaktionsprodukte nicht in Lösung gehen d.h. nicht an den Elektrolyten abgegeben werden. Nach 20 Zyklen konnten ca. 1000 mAh/g-Schwefel in einer Na-S-Halbzelle erreicht werden, bei einer Ladeeffizienz von über 99 %. Nachteilig an dieser Na-S-Batterie ist jedoch, dass rein-mikoporöser Kohlenstoff nur sehr aufwendig hergestellt werden kann und damit die Herstellung dieser Batterie nicht sehr ökonomisch ist.

Ferner ist bekannt, dass der Polysulfidshuttle mit einem sog. "Nanoschwamm" verringert werden kann, wobei der "Nanoschwamm" aus Kohlenstoffnanodrähten und mesoporösem Kohlenstoff besteht und auf der Kathode aufliegt (Yu X. & Manthiram, A. (2014) J. Phys. Chem. Lett., Bd. 5, S. 1943-1947). Der "Nanoschwamm" zieht gelöste Polysulfide elektrisch an und bindet sie an sein elektrisch leitfähiges Gerüst. Von anfänglichen 1000 mAh/g-Schwefel konnten nach 20 Zyklen noch 400 mAh/g-Schwefel erreicht werden. Der "Nanoschwamm" bedeutet jedoch ein zusätzliches Gewicht der Batterie, welches kein Aktivmaterial mit sich bringt und vor allem für mobile Anwendungen der Batterie nachteilig ist, da zusätzliches Gewicht bewegt werden muss.

Ausgehend hiervon war es die Aufgabe der vorliegenden Erfindung, eine bei Raumtemperatur betreibbare Natrium-Schwefel-Batterien bereitzustellen, die ökonomisch produziert werden kann und bei möglichst geringem Gewicht eine maximal hohe Entladekapazität und Ladeeffizienz aufweist.

Die Aufgabe wird gelöst durch die Natrium-Schwefel-Batterie gemäß Anspruch 1, das Verfahren zum Betrieb der erfindungsgemäßen Natrium-Schwefel-Batterie gemäß Anspruch 13 und die Verwendung gemäß Anspruch 14.

Erfindungsgemäß wird eine Natrium-Schwefel-Batterie bereitgestellt, enthaltend
a) eine Kathode, die
   i) Kohlenstoff; und
   ii) Schwefel, Polysulfide und/oder Natriumsulfid;
   enthält oder daraus besteht;
b) eine Anode, die Natriummetall, ein mit Natrium Legierungen bildendes Material und/oder ein Natrium-lonen-interkalationsfähiges Material enthält oder daraus besteht;
c) einen Separator;
d) einen Elektrolyt, der ein organisches Lösungsmittel und ein Natrium-haltiges Leitsalz enthält oder daraus besteht; und
e) ein Additiv zur Komplexierung von Natriumpolysulfid;
oder bestehend daraus.

Die erfindungsgemäße Natrium-Schwefel-Batterie weist den Vorteil auf, dass das Additiv in der Na-S-Batterie dazu geeignet ist, Natriumpolysulfid zu komplexieren und ferner im normalen Spannungsbereich der Batteriezelle eine Natriumionen-leitende, aber nicht Elektronen-leitende, Festelektrolytschicht (SEI) auf der Anode ausbilden kann. Die SEI verringert den Polysulfidshuttle innerhalb der Natrium-Schwefel-Batterie. Folglich verringert sich die Selbstentladung der Batterie bei sonst gleichen Bedingungen (Separator, gleiche Elektrolytmenge, Temperatur und Stromflüsse). Ein weiterer Vorteil ist, dass die Lade- und Entladereaktion modifiziert ist, wodurch während dem Zyklieren eine niedrigere Ladespannung und eine höhere Entladespannung erreicht wird. Die Energieeffizienz und Entladekapazität ist aufgrund des Effektes der Festelektrolytschicht deutlich gesteigert.

Die Natrium-Schwefel-Batterie ist dazu geeignet, bei einer Temperatur von-50 bis 90 °C betrieben zu werden. Mit anderen Worten kann die erfindungsgemäße Batterie auch in einem Temperaturbereich betrieben werden, in dem das Natriummetall, das mit Natrium Legierungen bildende Material und/oder das Natrium-lonen-interkalationsfähige Material der Anode in einem festen Zustand vorliegt. Folglich liegt in einer bevorzugten Ausgestaltungsform das Natriummetall, das mit Natrium Legierungen bildende Material und/oder das Natrium-lonen-interkalationsfähige Material der Anode in fester Form vor.

In einer bevorzugten Ausführungsform der Erfindung enthält das Additiv Phosphorpolysulfid, bevorzugt Phosphorpolysulfid und Natriumsulfid, oder besteht daraus. Das Additiv kann Phosphorpolysulfid und Natriumsulfid im molaren Verhältnis von 1:5 bis 5:1, bevorzugt 1:3 bis 3:1, besonders bevorzugt 1:2 bis 2:1, insbesondere 1:1, enthalten. Bevorzugt enthält das Natriumsulfid Natriumpolysulfid und Natriummonosulfid oder besteht daraus. Es wurde gefunden, dass Phosphorpolysulfid, insbesondere die Kombination von Phosphorpolysulfid und Natriumsulfid, einen besonders effizienten Komplexbildner für Natriumpolysulfid darstellt.

Das Additiv kann in einer Konzentration von 0,01 bis 1,5 mol/L, bevorzugt 0,05 bis 1,0 mol/L, besonders bevorzugt 0,1 bis 0,5 mol/L, insbesondere 0,2 mol/L, in der Natrium-Schwefel-Batterie, bevorzugt in dem Elektrolyten der Natrium-Schwefel-Batterie, enthalten sein.

Der Elektrolyt, die Anode und/oder Kathode, bevorzugt der Elektrolyt und/oder die Anode, besonders bevorzugt der Elektrolyt, kann das Additiv enthalten.

Der Elektrolyt kann flüssig oder gelförmig, bevorzugt flüssig, sein.

Bevorzugt enthält der Elektrolyt ein flüssiges Elektrolytmaterial oder besteht daraus, bevorzugt einen Ether, besonders bevorzugt Tetraethylenglycoldimethylether.

Das Natrium-haltige Leitsalz kann in dem Elektrolyten in einer Konzentration von 0,5 bis 1,5 mol/L, bevorzugt 0,8 bis 1,2 mol/L, besonders bevorzugt 1 mol/L, in dem Elektrolyten enthalten sein.

Bevorzugt enthält das Natrium-haltige Leitsalz ein in dem Elektrolyt lösliches Natrium-haltiges Leitsalz oder besteht daraus, bevorzugt Natriumperchlorat.

Der Separator kann ein keramisches Material und/oder hydrophobes Kunststoffmaterial aufweisen oder daraus bestehen, bevorzugt Al₂O₃ und/oder Polypropylen, besonders bevorzugt Polypropylen (z.B. Celgard®). Der Separator kann optional porös sein. Ein Separator aus (z.B. hydrophobem) Kunststoff wie z.B. Polypropylen hat sich als besonders vorteilhaft in Kombination mit dem Elektrolyten der erfindungsgemäßen Batterie herausgestellt. Es wurde eine bemerkenswerte Unterdrückung des Polysulfidshuttles beobachtet.

Der Separator kann als Membran ausgestaltet sein, die eine Schichtdicke von 1 bis 2000 µm, bevorzugt 2 bis 1000 µm, besonders bevorzugt 3 bis 100 µm, insbesondere 5 bis 30 µm, aufweist.

In einer bevorzugten Ausführungsform enthält der Kohlenstoff der Kathode mikroporösen Kohlenstoff, mesoporösen Kohlenstoff, makroporösen Kohlenstoff und/oder Kohlenstoffnanoröhren, bevorzugt mikroporösen und mesoporösen Kohlenstoff, oder besteht daraus.

Das Natrium-lonen-interkalationsfähige Material kann Hartkohlenstoff und/oder Graphit enthalten oder daraus bestehen.

Die Elektrodenflächenkapazität der erfindungsgemäßen Batterie kann 0,001 bis 20 mAh/cm², bevorzugt 1 bis 3 mAh/cm², betragen.

Es wird ein Verfahren zum Betrieb einer Natrium-Schwefel-Batterie vorgeschlagen, wobei die erfindungsgemäße Natrium-Schwefel-Batterie bei einem Elektroden-Flächenstrom von 0,001 bis 10 mA/cm², bevorzugt 0,2 bis 1 mA/cm², betrieben wird.

Es wird ferner vorgeschlagen, Phosphorpolysulfid als Additiv in einer Natrium-Schwefel-Batterie zu verwenden, bevorzugt als Additiv in einer Anode einer Natrium-Schwefel-Batterie, in einer Kathode einer Natrium-Schwefel-Batterie und/oder in einem Elektrolyten einer Natrium-Schwefel-Batterie. Besonders bevorzugt ist die Verwendung als Additiv in einer Anode einer Natrium-Schwefel-Batterie.

Es hat sich als vorteilhaft herausgestellt, wenn das verwendete Additiv zusätzlich Natriumsulfid, optional Natriumpolysulfid und/oder Natriummonosulfid enthält. Hierbei kann das Additiv Phosphorpolysulfid und Natriumsulfid im molaren Verhältnis von 1:5 bis 5:1, bevorzugt 1:3 bis 3:1, besonders bevorzugt 1:2 bis 2:1, insbesondere 1:1, enthalten.

Anhand der nachfolgenden Figuren und Beispiele soll der erfindungsgemäße Gegenstand näher erläutert werden, ohne diesen auf die hier dargestellten spezifischen Ausführungsformen einschränken zu wollen.
Figur 1 zeigt die Kapazität (Figur 1A) und den spezifischen Shuttlestrom als Maß für die Intensität des Polysulfidshuttles (Figur 1B) in Abhängigkeit von der Zyklenzahl einer erfindungsgemäßen Natrium-Schwefel-Batterie einerseits und einer Referenzbatterie andererseits.
Figur 2 zeigt die Energieeffizienz (Spannung gegen Kapazität) einer erfindungsgemäßen Natrium-Schwefel-Batterie einerseits und einer Referenzbatterie andererseits.
Figur 3 zeigt den spezifischen Strom im Verhältnis zur Spannung einer erfindungsgemäßen Natrium-Schwefel-Batterie einerseits und einer Referenzbatterie andererseits.

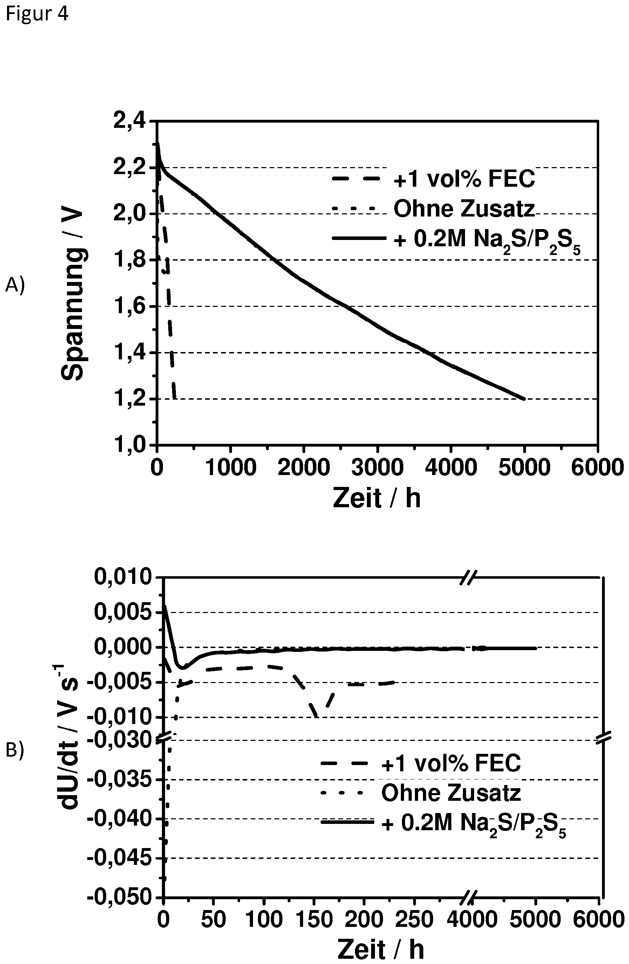

Figur 4A zeigt die Selbstentladung (Spannung gegen Zeit) einer erfindungsgemäßen Natrium-Schwefel-Batterie einerseits und einer Referenzbatterie andererseits. In Figur 4B ist dU/dt : V·s⁻¹ gegen die Zeit dargestellt.

### Beispiel 1 - Herstellung eines erfindungsgemäßen Natrium-Schwefel-Batterie

Zur Herstellung eines erfindungsgemäßen Elektrolyten wurde Natriumperchlorat (Endkonzentration 1 mol/L) und Phosphorpolysulfid zusammen mit Natrium(poly)sulfid (Endkonzentration 0,2 mol/L) in Tetraethylenglykoldimethylether gelöst. Der Elektrolyt wurde in einer Natrium-Schwefel-Zelle verwendet (= erfindungsgemäße Batterie).

Der Referenzelektrolyt wurde durch Lösen von Natriumperchlorat (Endkonzentration 1 mol/L) in Tetraethylenglykoldimethylether hergestellt d.h. der Referenzelektrolyt enthielt kein Phosphorpolysulfid mit Natrium(poly)sulfid. Der Referenzelektrolyt wurde in einer weiteren Natrium-Schwefel-Zelle verwendet (= Referenzbatterie).

### Beispiel 2 - Kapazität und Stärke des Polysulfidshuttles einer erfindungsgemäßen Batterie

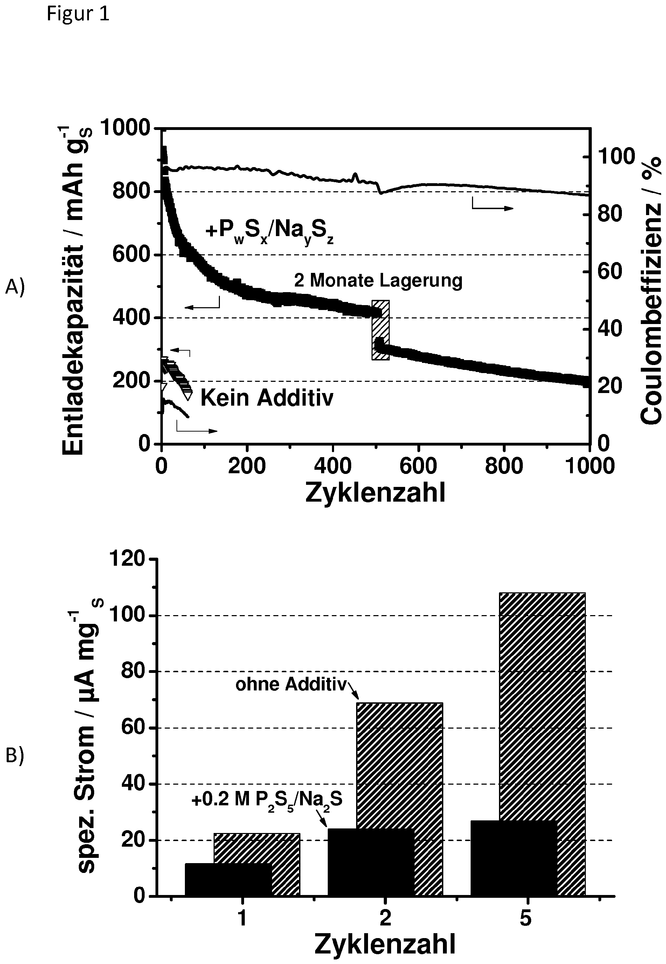

Die erfindungsgemäße Batterie und die Referenzbatterie aus Beispiel 1 wurden auf ihre Kapazität (Figur 1A) und Stärke des Polysulfidshuttles (Figur 1B) untersucht. Die erfindungsgemäße Batterie weist eine deutliche Verbesserung auf.

### Beispiel 3 - Energieeffizienz einer erfindungsgemäßen Batterie

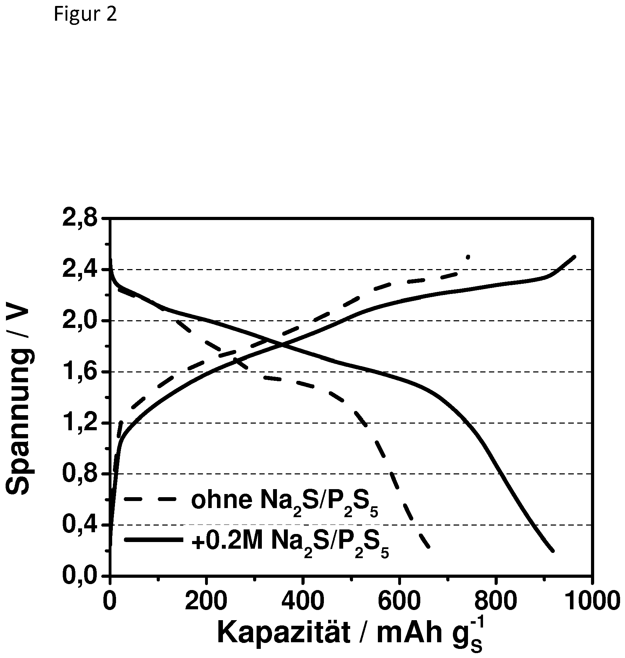

Die erfindungsgemäße Batterie und die Referenzbatterie aus Beispiel 1 wurden auf ihre Energieeffizienz getestet. Das Ergebnis ist in Figur 2 dargestellt. Die erfindungsgemäße Batterie weist eine wesentlich höhere Energieeffizienz auf.

### Beispiel 4 - Veränderter Reaktionsmechanismus einer erfindungsgemäßen Batterie

Es wurde die Spannung in Abhängigkeit von der Kapazität von der erfindungsgemäßen Batterie und von der Referenzbatterie aus Beispiel 1 untersucht. Das Ergebnis ist in Figur 2 dargestellt. Es wird deutlich, dass die erfindungsgemäße Batterie einen geringeren Polysulfidshuttle aufweist.

### Beispiel 5 - Selbstentladung einer erfindungsgemäßen Batterie

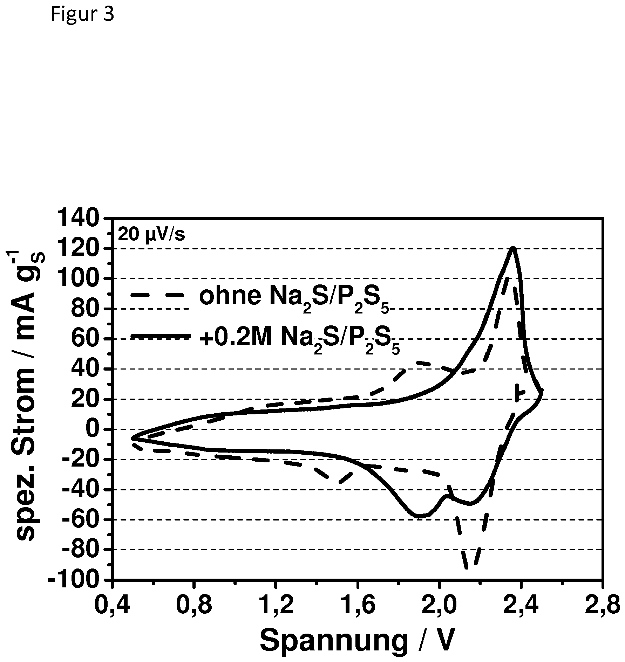

Die Batteriespannung der erfindungsgemäßen Batterie und der Referenzbatterie aus Beispiel 1 wurde im Verlauf der Zeit gemessen. Das Ergebnis ist in Figur 3A und 3B dargestellt. Die erfindungsgemäße Batterie weist eine deutlich niedrigere Selbstentladung auf.

## Patentansprüche

1. Natrium-Schwefel-Batterie enthaltend
a) eine Kathode, die
i) Kohlenstoff; und
ii) Schwefel, Polysulfide und/oder Natriumsulfid;
enthält oder daraus besteht;
b) eine Anode, die Natriummetall, ein mit Natrium Legierungen bildendes Material und/oder ein Natrium-Ioneninterkalationsfähiges Material enthält oder daraus besteht;
c) einen Separator; und
d) einen Elektrolyt, der ein organisches Lösungsmittel und ein Natrium-haltiges Leitsalz enthält oder daraus besteht; und
e) ein Additiv zur Komplexierung von Natriumpolysulfid;
oder bestehend daraus.

2. Natrium-Schwefel-Batterie gemäß einem der vorhergehenden Ansprüche, **dadurch gekennzeichnet, dass** das Additiv Phosphorpolysulfid, bevorzugt Phosphorpolysulfid und Natriumsulfid, enthält oder daraus besteht, wobei das Natriumsulfid besonders bevorzugt Natriumpolysulfid und Natriummonosulfid enthält oder daraus besteht.

3. Natrium-Schwefel-Batterie gemäß einem der vorhergehenden Ansprüche, **dadurch gekennzeichnet, dass** das Additiv in einer Konzentration von 0,01 bis 1,5 mol/L, bevorzugt 0,05 bis 1,0 mol/L, besonders bevorzugt 0,1 bis 0,5 mol/L, insbesondere 0,2 mol/L, in der Natrium-Schwefel-Batterie, bevorzugt in dem Elektrolyten der Natrium-Schwefel-Batterie, enthalten ist.

4. Natrium-Schwefel-Batterie gemäß einem der vorhergehenden Ansprüche, **dadurch gekennzeichnet, dass** der Elektrolyt, die Anode und/oder Kathode, bevorzugt der Elektrolyt und/oder die Anode, besonders bevorzugt der Elektrolyt, das Additiv enthält.

5. Natrium-Schwefel-Batterie gemäß einem der vorhergehenden Ansprüche, **dadurch gekennzeichnet, dass** der Elektrolyt flüssig oder gelförmig, bevorzugt flüssig, ist.

6. Natrium-Schwefel-Batterie gemäß einem der vorhergehenden Ansprüche, **dadurch gekennzeichnet, dass** der Elektrolyt ein flüssiges Elektrolytmaterial enthält oder daraus besteht, bevorzugt einen Ether, besonders bevorzugt Tetraethylenglycoldimethylether.

7. Natrium-Schwefel-Batterie gemäß einem der vorhergehenden Ansprüche, **dadurch gekennzeichnet, dass** das Natrium-haltige Leitsalz in einer Konzentration von 0,2 bis 5 mol/L, bevorzugt 0,8 bis 1,2 mol/L, besonders bevorzugt 1 mol/L, in dem Elektrolyten enthalten ist.

8. Natrium-Schwefel-Batterie gemäß einem der vorhergehenden Ansprüche, **dadurch gekennzeichnet, dass** das Natrium-haltige Leitsalz ein in dem Elektrolyt lösliche Natrium-haltigeVerbindung enthält oder daraus besteht, bevorzugt Natriumperchlorat.

9. Natrium-Schwefel-Batterie gemäß einem der vorhergehenden Ansprüche, **dadurch gekennzeichnet, dass** der Separator ein keramisches Material und/oder Kunststoffmaterial, bevorzugt Al₂O₃ und/oder Polypropylen, besonders bevorzugt Polypropylen, enthält oder daraus besteht, wobei der Separator optional porös ist.

10. Natrium-Schwefel-Batterie gemäß einem der vorhergehenden Ansprüche, **dadurch gekennzeichnet, dass** der Separator eine Schichtdicke von 1 bis 2000 µm, bevorzugt 2 bis 1000 µm, besonders bevorzugt 3 bis 100 µm, insbesondere 5 bis 30 µm, aufweist.

11. Natrium-Schwefel-Batterie gemäß einem der vorhergehenden Ansprüche, **dadurch gekennzeichnet, dass** der Kohlenstoff der Kathode mikroporösen Kohlenstoff, mesoporösen Kohlenstoff, makroporösen Kohlenstoff und/oder Kohlenstoffnanoröhren enthält oder daraus besteht, bevorzugt mikroporösen und mesoporösen Kohlenstoff.

12. Natrium-Schwefel-Batterie gemäß einem der vorhergehenden Ansprüche, **dadurch gekennzeichnet, dass** die Elektrodenflächenkapazität 0,001 bis 20 mAh/cm², bevorzugt 1 bis 3 mAh/cm², beträgt.

13. Verfahren zum Betrieb einer Natrium-Schwefel-Batterie, umfassend den Betrieb der Natrium-Schwefel-Batterie gemäß einem der vorhergehenden Ansprüche
i) bei einem Elektroden-Flächenstrom von 0,001 bis 10 mA/cm², bevorzugt 0,2 bis 1 mA/cm²; und/oder
ii) bei einer Temperatur zwischen -40 °C und 150 °C, bevorzugt bei 25 °C.

14. Verwendung von Phosphorpolysulfid als Additiv in einer Natrium-Schwefel-Batterie, bevorzugt als Additiv
i) in einer Anode einer Natrium-Schwefel-Batterie;
ii) in einer Kathode einer Natrium-Schwefel-Batterie; und/oder
iii) in einem Elektrolyten einer Natrium-Schwefel-Batterie.

15. Verwendung gemäß Anspruch 14, **dadurch gekennzeichnet, dass** das Additiv ferner Natriumsulfid, bevorzugt Natriumpolysulfid und/oder Natriummonosulfid, enthält.

## Claims

1. Sodium-sulfur battery comprising
a) a cathode which comprises or consists of
i) carbon; and
ii) sulfur, polysulfides and/or sodium sulfide;
b) an anode which comprises or consists of sodium metal, a material which forms alloys with sodium and/or a material capable of intercalating sodium ions;
c) a separator; and
d) an electrolyte which comprises or consists of an organic solvent and a sodium-containing conducting salt; and
e) an additive for complexing sodium polysulfide;
or consisting thereof.

2. Sodium-sulfur battery according to one of the preceding claims, **characterized in that** the additive comprises or consists of phosphorus polysulfide, preferably phosphorus polysulfide and sodium sulfide, wherein the sodium sulfide particularly preferably comprises or consists of sodium polysulfide and sodium monosulfide.

3. Sodium-sulfur battery according to any of the preceding claims, **characterized in that** the additive is present in a concentration of from 0.01 to 1.5 mol/l, preferably from 0.05 to 1.0 mol/l, particularly preferably from 0.1 to 0.5 mol/l, in particular 0.2 mol/l, in the sodium-sulfur battery, preferably in the electrolyte of the sodium-sulfur battery.

4. Sodium-sulfur battery according to any of the preceding claims, **characterized in that** the electrolyte, the anode and/or cathode, preferably the electrolyte and/or the anode, particularly preferably the electrolyte, comprises the additive.

5. Sodium-sulfur battery according to any of the preceding claims, **characterized in that** the electrolyte is liquid or gel-like, preferably liquid.

6. Sodium-sulfur battery according to any of the preceding claims, **characterized in that** the electrolyte comprises or consists of a liquid electrolyte material, preferably an ether, particularly preferably tetraethylene glycol dimethyl ether.

7. Sodium-sulfur battery according to any of the preceding claims, **characterized in that** the sodium-containing electrolyte salt is present in a concentration of from 0.2 to 5 mol/l, preferably from 0.8 to 1.2 mol/l, particularly preferably 1 mol/l, in the electrolyte.

8. Sodium-sulfur battery according to any of the preceding claims, **characterized in that** the sodium-containing electrolyte salt comprises or consists of a sodium-containing compound which is soluble in the electrolyte, preferably sodium perchlorate.

9. Sodium-sulfur battery according to any of the preceding claims, **characterized in that** the separator comprises or consists of a ceramic material and/or polymer material, preferably Al₂O₃ and/or polypropylene, particularly preferably polypropylene, with the separator optionally being porous.

10. Sodium-sulfur battery according to any of the preceding claims, **characterized in that** the separator has a layer thickness of from 1 to 2000 µm, preferably from 2 to 1000 µm, particularly preferably from 3 to 100 µm, in particular from 5 to 30 µm.

11. Sodium-sulfur battery according to any of the preceding claims, **characterized in that** the carbon of the cathode comprises or consists of microporous carbon, mesoporous carbon, macroporous carbon and/or carbon nanotubes, preferably microporous and mesoporous carbon.

12. Sodium-sulfur battery according to any of the preceding claims, **characterized in that** the electrode capacity per unit area is from 0.001 to 20 mAh/cm², preferably from 1 to 3 mAh/cm².

13. Method for operating a sodium-sulfur battery, comprising operation of the sodium-sulfur battery according to any of the preceding claims
i) at an electrode current per unit area of from 0.001 to 10 mA/cm², preferably from 0.2 to 1 mA/cm²; and/or
ii) at a temperature in the range from -40°C to 150°C, preferably at 25°C.

14. Use of phosphorus polysulfide as additive in a sodium-sulfur battery, preferably as additive
i) in an anode of a sodium-sulfur battery;
ii) in a cathode of a sodium-sulfur battery; and/or
iii) in an electrolyte of a sodium-sulfur battery.

15. Use according to Claim 14, **characterized in that** the additive additionally comprises sodium sulfide, preferably sodium polysulfide and/or sodium monosulfide.

## Revendications

1. Batterie sodium-soufre, contenant
a) une cathode, qui contient
i) du carbone ; et
ii) du soufre, des polysulfures et/ou du sulfure de sodium ;
ou en est constituée ;
b) une anode, qui contient du sodium métallique, un matériau formant des alliages avec le sodium et/ou un matériau présentant une capacité d'intercalation d'ions sodium, ou en est constituée ;
c) un séparateur ; et
d) un électrolyte, qui contient un solvant organique et un sel conducteur contenant du sodium, ou en est constitué ; et
e) un additif pour la complexation du polysulfure de sodium ;
ou en étant constituée.

2. Batterie sodium-soufre selon l'une des revendications précédentes, **caractérisée en ce que** l'additif contient du polysulfure de phosphore, de préférence du polysulfure de phosphore et du sulfure de sodium, ou en est constitué, le sulfure de sodium contenant d'une manière particulièrement préférée du polysulfure de sodium et du monosulfure de sodium, ou en étant constitué.

3. Batterie sodium-soufre selon l'une des revendication précédentes, **caractérisée en ce qu'**elle contient l'additif à une concentration de 0,01 à 1,5 mol/l, de préférence de 0,05 à 1,0 mol/l, d'une manière particulièrement préférée de 0,1 à 0,5 mol/l, en particulier de 0,2 mol/l, dans la batterie sodium-soufre, de préférence dans l'électrolyte de la batterie sodium-soufre.

4. Batterie sodium-soufre selon l'une des revendications précédentes, **caractérisée en ce que** l'électrolyte, l'anode et/ou la cathode, de préférence l'électrolyte et/ou l'anode, d'une manière particulièrement préférée l'électrolyte, contiennent l'additif.

5. Batterie sodium-soufre selon l'une des revendications précédentes, **caractérisée en ce que** l'électrolyte se présente sous forme liquide ou de gel, de préférence liquide.

6. Batterie sodium-soufre selon l'une des revendications précédentes, **caractérisée en ce que** l'électrolyte contient un matériau d'électrolyte liquide ou en est constitué, de préférence un éther, d'une manière particulièrement préférée l'éther diméthylique du tétraéthylèneglycol.

7. Batterie sodium-soufre selon l'une des revendications précédentes, **caractérisée en ce que** le sel conducteur contenant du sodium est contenu dans l'électrolyte à une concentration de 0,2 à 5 mol/l, de préférence de 0,8 à 1,2 mol/l, d'une manière particulièrement préférée de 1 mol/l.

8. Batterie sodium-soufre selon l'une des revendications précédentes, **caractérisée en ce que** le sel conducteur contenant du sodium contient un composé contenant du sodium et soluble dans l'électrolyte, ou en est constitué, de préférence du perchlorate de sodium.

9. Batterie sodium-soufre selon l'une des revendications précédentes, **caractérisée en ce que** le séparateur contient un matériau céramique et/ou un matériau plastique, de préférence de l'Al₂O₃ et/ou du polypropylène, d'une manière particulièrement préférée du polypropylène, ou en est constitué, le séparateur étant optionnellement poreux.

10. Batterie sodium-soufre selon l'une des revendications précédentes, **caractérisée en ce que** le séparateur présente une épaisseur de couche de 1 à 2000 µm, de préférence de 2 à 1000 µm, d'une manière particulièrement préférée de 3 à 100 µm, en particulier de 5 à 30 µm.

11. Batterie sodium-soufre selon l'une des revendications précédentes, **caractérisée en ce que** le carbone de la cathode contient du carbone microporeux, du carbone mésoporeux, du carbone macroporeux et/ou des nanotubes de carbone ou en est constitué, de préférence du carbone microporeux et mésoporeux.

12. Batterie sodium-soufre selon l'une des revendications précédentes, **caractérisée en ce que** la capacité surfacique de l'électrode est de 0,001 à 20 mAh/cm², de préférence de 1 à 3 mAh/cm².

13. Procédé pour l'exploitation d'une batterie sodium-soufre, comprenant l'exploitation de la batterie sodium-soufre selon l'une des revendications précédentes
i) pour une intensité surfacique de l'électrode de 0,001 à 10 mA/cm², de préférence de 0,2 à 1 mA/cm² ; et/ou
ii) à une température comprise entre -40 °C et 150 °C, de préférence de 25 °C.

14. Utilisation de polysulfure de phosphore en tant qu'additif dans une batterie sodium-soufre, de préférence en tant qu'additif
i) dans une anode d'une batterie sodium-soufre ;
ii) dans une cathode d'une batterie sodium-soufre ; et/ou
iii) dans un électrolyte d'une batterie sodium-soufre.

15. Utilisation selon la revendication 14, **caractérisée en ce que** l'additif contient en outre du sulfure de sodium, de préférence du polysulfure de sodium et/ou du monosulfure de sodium.
